# EUROPÄISCHE PATENTSCHRIFT

(11) **EP 0 722 831 B1**
(45) Veröffentlichungstag und Bekanntmachung des Hinweises auf die Patenterteilung: **18.08.1999**
(21) Anmeldenummer: 95119819.1
(22) Anmeldetag: 22.04.1993
(51) Int. Cl.: B41F 13/00, H02K 7/14, B41F 13/28, B41F 13/14

(54) **Verfahren und Anordnung für einen Elektromotor zum Antrieb eines Drehkörpers, insbesondere des druckgebenden Zylinders einer Druckmaschine**
Method and arrangement for an electric motor for driving a rotary, in particular a printing cylinder of a printing machine
Procédé et arrangement pour un moteur électrique pour entraîner un corps de rotation, en particulier un cylindre d'imprimerie

(43) Veröffentlichungstag der Anmeldung: 24.07.1996
(62) Teilanmeldung aus: 93106545.2
(73) Patentinhaber: BAUMÜLLER NÜRNBERG GMBH, D-90482 Nürnberg (DE); BAUMÜLLER ANLAGEN-SYSTEMTECHNIK GmbH Co., 90482 Nürnberg (DE)
(72) Erfinder: Müller, Dieter, D-91235 Hartenstein (DE); Götz, Fritz Rainer Dr.-Ing., D-90522 Oberasbach (DE)
(74) Vertreter: Götz, Georg, Dipl.-Ing.

(56) Entgegenhaltungen:
- EP-A- 0 244 034
- EP-A- 0 521 577
- DE-A- 3 022 516
- DE-A- 3 432 572
- DE-A- 3 825 600
- DE-C- 3 136 703
- DE-U- 8 703 410
- FR-A- 2 391 073
- GB-A- 2 146 291
- US-A- 3 945 266

## Beschreibung

Die Erfindung betrifft eine Druckmaschine mit wenigstens einem Zylinder oder sonstigen Drehkörper, der bezüglich seiner Drehachse in einer Wandung Längsverstellbar geführt ist. Darin stellen die mehreren, für die Druckgebung zusammenwirkenden Zylinder, die drehbar, bezüglich der Diagonal-, Seiten- und Umfangsregister verstellbar sowie aneinander anstellbar zur Bildung eines Papiereinzugs gelagert sind, die relevanten Drehkörper dar.

Aus GB-A-2 146 291 ist eine Rotationsdruckmaschine mit Einzelantrieben für Zylinder bekannt, wobei jedoch eine Längsverstellbarkeit des Druckzylinders, der Farbwalze oder des Plattenzylinders für die Seitenregisterverstellung nicht offenbart ist.

Eine gattungsgemäße Druckmaschine ist aus der Offenlegungsschrift DE-A-38 25 600 A1 bekannt. Darin sind die Achsen von Zylindern, die auf ihren Außenseiten auswechselbare, Druckbilder aufweisende Hülsen tragen, zu ihrer Seitenregistereinstellung axial verschiebbar gelagert. Dies gilt auch für Gummihülsen auf der äußeren Mantelfläche tragende Zylinder. Die axiale Verschiebung erfolgt über die Abwälzung schrägverzahnter Zahnräder oder über sonstige, im Stand der Technik bekannte Mittel. Der Antrieb der Druckzylinder erfolgt bei derartigen Druckmaschinen im allgemeinen von einem gemeinsamen Hauptantrieb aus, der seine Antriebsleistung über eine mechanische Längswelle auf die Einzelaggregate der Druckmaschine verteilt. Die Druckwerke sind durch diese mechanische Längswelle derart miteinander verbunden und gekoppelt, daß auf deren Synchronlauf zueinander sichergestellt ist. Zur praktischen Realisierung ist allerdings ein komplexes mechanisches System mit einer Vielzahl unterschiedlicher Komponenten wie z.B. Getriebe, Kupplungen, Spindeln, Schlitten usw. notwendig. Die hieraus resultierenden Schwachpunkte wie Übertragungsfehler aufgrund Nachgiebigkeiten mechanischer Übertragungsglieder, Spiel- und Reibungsumkehrspannen, Elastizitäten, zusätzliche große Trägheitsmassen sowie zahlreiche, niedrig gelegene Eigenfrequenzen beeinträchtigen die Druckbildgüte und die Registergenauigkeit solcher konventioneller Druckwerke.

Aus der Offenlegungsschrift DE-A-34 32 572 A1 ist eine Rotationsdruckpresse mit einem eine durchgehende Bahn von zu bedruckendem Material tragenden Druckzylinder, einem daran angestellten Plattenzylinder für eine Farbe und eine daran angestellte Farbwalze bekannt. Die Antriebswellen dieser Drehelemente sind teils mittelbar über einen Zahnriemen, teils direkt mit dem Rotor eines jeweils eigens zugeordneten elektrischen Antriebsmotors verbunden, wobei diese Antriebsmotoren von einer übergeordneten Steuerung geführt werden. Allerdings ist insbesondere für die direkt mit den Rotoren der Elektromotoren verbundenen Platten- und Farbzylinder keinerlei Möglichkeit zur Seitenregisterverstellung eröffnet.

Zwar ist es bekannt (vgl. Offenlegungsschrift DE-A-30 22 516 A1), bei Reibscheibenantrieben insbesondere für Spindelpressen die Welle bzw. den Rotor des elektrischen Antriebsmotors auf kräftigen Rollenlagern axial verschiebbar zu lagern. Zur Verschiebung wird der Einsatz von Preßluft oder eines Elektromagneten mit Erregerwicklung in einem Magnetkörper und einer gegen Federdruck bewegbaren Magnetscheibe vorgeschlagen. Derartige Anordnungen zur Axialverschiebung sind jedoch für den Einsatz in Druckmaschinen vor allem angesichts der darin geforderten Genauigkeit für die Seitenregistereinstellung ungeeignet und auch überhaupt nicht dafür beabsichtigt.

Der Erfindung liegt die Aufgabe zugrunde, eine Druckmaschine mit Seitenregisterverstellung des Druckzylinders oder sonstigen Drehkörpers auch mit einem Direktantrieb zu schaffen. Zur Lösung wird die im Patentanspruch 1 gekennzeichnete Druckmaschine vorgeschlagen. Weitere, vorteilhafte Ausgestaltungen ergeben sich aus den Unteransprüchen.

Aufgrund der Erfindung ist die Ausnutzung des Luftspalts zwischen Stator und Rotor zur Seitenregisterverstellung möglich, indem der mit dem Druckmaschinen-Drehkörper direkt verbundene Rotor längs des Luftspaltes linear verstellbar ist.

In Verbindung mit dem elektrischen Direktantrieb für jeden Zylinder bzw. jede Druckwerkswalze ist gleichzeitig ein spielfreier, trägheitsarmer und mechanisch steifer Antriebsstrang aufgebaut. Dies ergibt eine hohe Regeldynamik, so daß sich exakte Bahnführung, konstante Bahnspannung und gleichbleibende Farbgebung über die so ermöglichte, hochpräzise Registersteuerung und Druckanstellung erreichen lassen. Die relevanten Drehkörper (beispielsweise Platten- und Gummituch-Zylinder in einem Druckwerk) werden erfindungsgemäß direkt angetrieben, so daß die oben diskutierte Regelungsaufgabe bzw. die notwendigen Regelsysteme drastisch vereinfacht werden: Die zu bewegenden Massen sind unter Ausschluß von Elastizitäten, Nachgiebigkeiten und Spielen direkt mit dem Rotor des antreibenden Elektromotors steif und fest verbunden. Dabei ist erfindungsgemäß auch der Stator des Elektromotors mit einer stationären Wandung, beispielsweise der Druckmaschinenwand, elastizitäts- und spielfrei verbunden.

Es ist es denkbar, daß bei linearen Drehkörper-/Rotor-Verstellbewegungen größeren Umfangs der Luftspalt sich nicht so ausreichend bemessen läßt, um diese ausgleichen zu können. Dem wird mit einer Ausbildung der Erfindung Rechnung getragen, bei der eine lineare Nachführeinrichtung vorgesehen ist, die auf den Stator einwirkt und so ausgebildet ist, daß der Stator die Drehkörper-/Rotor-Linearverstellbewegungen, jedenfalls solange diese die Abmessungen des Luftspalts überschreiten, nachvollzieht. Die lineare Nachführeinrichtung kann als Funktionskomponente eine in Achsrichtung des Motors bzw. Zylinders gerichtete Linearführung umfassen, um den Stator an Seitenregister-Verstellungen des Zylinders anzupassen.

Um eine stationäre, steife Abstützung eines in axialer Richtungverschiebbaren Stators an der Wandung zu erreichen, ist in weiterer Ausbildung der Erfindung eine Feststelleinrichtung vorgesehen, die mit der linearen Nachführeinrichtung derart verbunden, insbesondere synchroniert ist, daß sie nach Beendigung der aktiven Nachführung des Stators diesen relativ zur Wandung fixiert.

Zur axialen Linearverschiebung des Stators entsprechend den Drehkörper-/Rotor-Linearverstellbewegungen ist es zweckmäßig, eine gesonderte Bewegungseinrichtung vorzusehen: z.B. einen Linearantrieb, der am axial verschiebbar gelagerten Stator angreift, um den Stator zur Beibehaltung eines ausreichenden Luftspalts nachzuführen. Diese Nachführbewegung lassen sich in ihrer Genauigkeit noch weiter verbessern, indem die genannten Linearantriebe, die jeweils dem Stator einerseits und dem Drehkörper-/Rotor-Verbund andererseits zugeordnet sind, bei Seiten-Registerverstellung miteinander gekoppelt und/oder synchronisiert sind.

Weitere Einzelheiten, Merkmale und Vorteile auf der Basis der Erfindung ergeben sich aus der nachfolgenden Beschreibung eines bevorzugten Ausführungsbeispiels der Erfindung und anhand der Zeichnungen. Diese zeigen mit jeweils schematischer Darstellung in
- Fig. 1: eine radiale Vorderansicht auf die Druckwerkszylinder,
- Fig. 2: eine Draufsicht auf die Druckwerkszylinder gemäß Richtung II in Fig. 1,
- Fig. 3: im axialen bzw. Längsschnitt die Anbringung des Elektromotors an Druckwerkszylinder und Wandung,
- Fig. 4: eine Richtungspfeil IV in Fig. 3 entsprechende Stirnansicht
- Fig. 5: eine Richtungspfeil V in Fig. 3 entsprechende Stirnansicht und

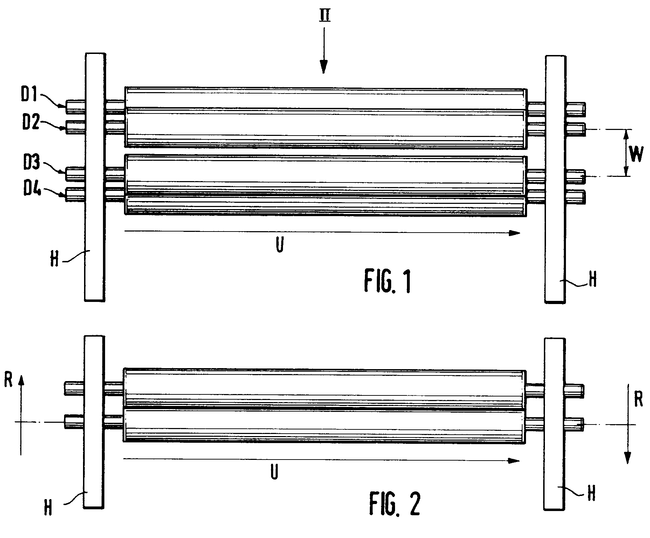

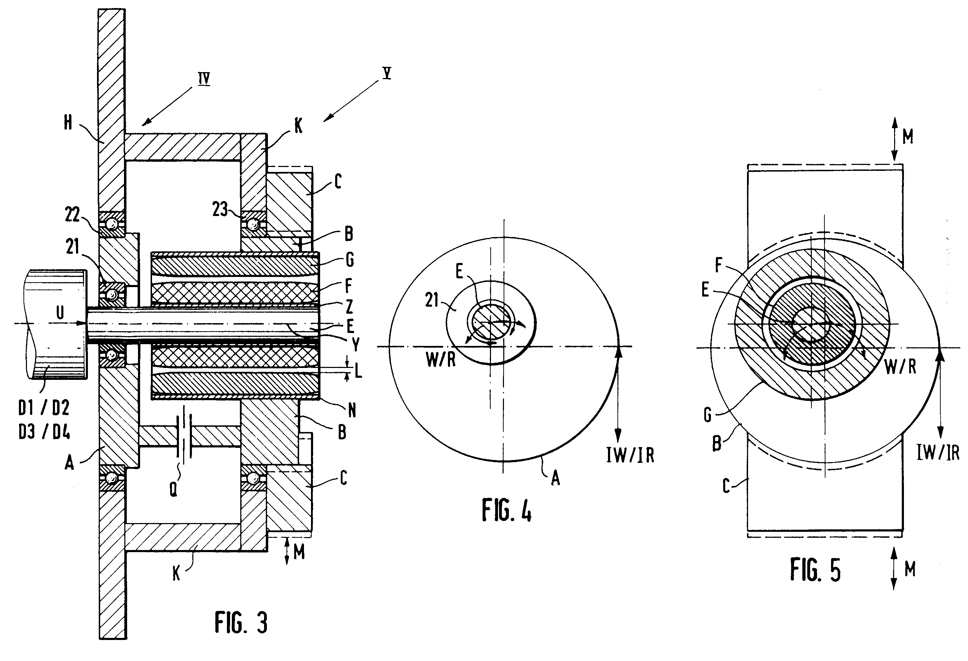

In Fig. 1 und 2 ist die Lage der Zylinder D 1 - D 4 einer Offsetdruckmaschine zueinander etwas verändert dergestalt, daß sie sowohl in Vorder- bzw. Frontansicht (Fig. 1) als auch in Draufsicht (Fig. 2) einander teilweise überdecken. Die in der Druckwerkswandung H gelagerten Plattenzylinder D 1, D 4 und Gummituchzylinder D 2, D 3 sind mit folgenden Freiheitsgraden versehen: Um die Lage des Druckbildes quer zur Laufrichtung des Papiers P beeinflussen zu können, sind vor allem die Plattenzylinder D 1, D 4 in Längsrichtung U, also parallel zu ihrer Mittelachse, verstellbar gelagert. Diese Richtungsverstellung wird in der Drucktechnik "Verstellung der Seitenregister" genannt. Um die Lage des Druckbildes um eine Achse senkrecht zur Zylinder-Mittel-/Längs-Achse drehen zu können, werden die Plattenzylinder D 1, D 4 jeweils an ihren Enden in Querrichtung R verstellt. Diese Bewegungsart wird "Verstellen der Diagonalregister" genannt.

Vor dem eigentlichen Druckvorgang ist das zu bedruckende Papier P zunächst zwischen die Gummituchzylinder D 2, D 3 einzuziehen. Zu diesem Zweck wird es in Papierlaufrichtung zwischen den Gummituchzylindern D 2, D 3 hindurchgeführt. Diese Zylinder sind bei diesem Vorgang des Papiereinziehens zunächst voneinander getrennt, so daß sie einen gemeinsamen Einzugsspalt begrenzen. Ist die Offsetmaschine betriebsbereit, werden den Gummituchzylindern D 2, D 3 jeweils eine Anstellbewegung W erteilt, so daß sie zusammengefahren werden und sich gegeneinanderpressen. Im Zuge der Anstellbewegung W werden die Gummituchzylinder D 2, D 3 auch gegen die Plattenzylinder D 1, D 4 gedrückt. Diese Stellung wird in der Drucktechnik als "Druck-An" bezeichnet.

Gemäß Fig. 3 - 5 ist auf der Antriebswelle E eines der vier oben genannten Zylinder D 1, D 2, D 3, D 4 die Rotorhülse Z des Rotorpakets F eines elektrischen Antriebsmotors unmittelbar und ortsfest fixiert. Die Rotorhülse Z bildet zusammen mit dem Rotorpaket F den Rotor des Elektromotors. Die Antriebswelle E, direkt umgeben von einem Kugellager 21, ist in der Wandung H drehbar gelagert. Das Kugellager 21 ist unmittelbar von einer Exzenterbuchse A umfaßt, welche über ein weiteres Kugellager 22 mit der Druckwerkswand H verbunden ist. Infolgedessen kann sich die Antriebswelle E relativ sowohl zur Druckwerkswandung H als auch zur Exzenterbuchse A um ihre Drehachse Y drehen. Wird die Exzenterbuchse A über einen (nicht gezeichneten, weil an sich bekannten) Drehantrieb, beispielsweise ein Hebelgestänge oder eine Verzahnung, rotiert, entsteht eine tangential an der Exzenterbuchse A angreifende Kraft IW oder IR. Diese Kraft setzt sich über das erste, innere Kugellager 21 in eine radial ausgelenkte, exzentrische Umlaufbahn W bzw. R der Drehachse Y der Antriebswelle E des jeweiligen Zylinders D 1, D 2, D 3 oder D 4 um. Dies beruht darauf, daß die Exzenterbuchse A an ihrer Innenseite mit dem Außenring des ersten, inneren Kugellagers 21 und an ihrer Außenseite mit dem Innenring des zweiten, äußeren Kugellagers 22 jeweils ortsfest verbunden ist. Der Innenring des ersten Kugellagers 21 sitzt ortsfest auf der Antriebswelle E, während der Außenring des zweiten Kugellagers 22 an der Wandung H unbeweglich fixiert ist. Mit dieser Exzenterbuchsen-Lageranordnung 21, 22, A läßt sich eine Übertragung der vom Drehantrieb erzeugten, tangentialen Kraft IW bzw. IR von der Exzenterbuchse A auf die Gummituchzylinder D 2, D 3 bzw. die Plattenzylinder D 1, D 4 bewirken: die Drehachse Y des jeweiligen Zylinders beschreibt dann die Anstellbewegungsbahn W (bei den Gummituchzylindern D 2, D 3) bzw. die Diagonalregister-Verstellungsbahn R (bei den Plattenzylindern D 1, D 4). In der Ansicht der Fig. 4 sind diese radial-exzentrischen Auslenkungen W/R der Antriebswelle E veranschaulicht.

Gemäß Fig. 3 sind an der Außenseite der Wandung H im Bereich von deren Aussparung für die Antriebswelle E, die Exzenterbuchse A und die beiden Lager 21, 22 zwei Brückenvorsprünge K jeweils mit L-artigem Profil fest angesetzt, dergestalt, daß die jeweiligen, kürzeren L-Schenkel einander fluchtend zugewandt sind. Von deren gegenüberliegenden Seiten ist der Außenring eines weiteren, dritten Kugellagers 23 ortsfest eingeklemmt. Dessen Innenring umfaßt ebenfalls ortsfest eine zweite Exzenterbuchse B, deren ringförmige Innenseite auf der Statorhülse N aufgesetzt und daran ortsfest bzw. steif fixiert ist. Mithin entspricht diese Anordnung und Lagerung des von der Statorhülse eingefaßten Statorpakets G etwa der des Rotorpakets F bzw. der damit ortsfesten Antriebswelle E, wenn auch mit der Ausnahme, daß der Stator G, N des Elektromotors zwar gegenüber der Wandung H bzw. dessen Brückenansatz K, nicht aber gegenüber der zweiten Exzenterbuchse B verdrehbar ist. Infolgedessen ist die in Fig. 5 veranschaulichte Möglichkeit gegeben, den Stator G, N etwaigen Anstellbewegungen W oder Diagonalregister-Verstellbewegungen R des jeweiligen Zylinders D 1 - D 4 nachzuführen. Da sich die beiden Exzenterbuchsen A, B bei bestimmter Winkelstellung in ihren Außendurchmessern decken und deren jeweilige, äußere Kugellager 22, 23 in ebenfalls miteinander kongruenten Kreisringprofilen ausgebildet und angeordnet sind, ist gemäß Fig. 5 für den Stator G, N sogar eine mit den Bewegungen W/R des Rotors F, Z sich vollständig deckende bzw. übereinstimmende Nachführung möglich, wenn mittels des genannten oder eines weiteren Drehantriebs (Verzahnung oder Hebelgestänge) auf die zweite Exzenterbuchse B dieselbe Tangentialkraft IW bzw. IR ausgeübt wird. Sind gemäß Fig. 3 die beiden Exzenterbuchsen A, B in der Drehstellung, in der sie sich mit ihren Außendurchmessern axial gesehen decken (vgl. oben), mittels einer mechanisch lösbaren Verbindungseinrichtung Q starr aneinandergekoppelt, ist keine weitere Dreheinrichtung speziell für die Exzenterbuchse B erforderlich.

Nachdem der Stator G, N die Zylinder-/Rotorbewegungen W/R nachvollzogen hat, ist seine ortsfeste und steife Abstützung gegenüber der Wandung H bzw. deren Brückenansatz K notwendig. Hierzu sind Blockierklötze C um die Stator-Exzenterbuchse B herum, vorzugsweise diametral gegenüberliegend, angeordnet. Deren der Exzenterbuchse B zugewandte (Innen-)Seiten sind nach Art von Bremsbacken derart konkav gewölbt, daß sie die Exzenterbuchse B von außen formschlüssig umfassen und mithin deren Drehung im Lager 23 um die Achse Y blockieren können. Das Betätigen oder Lösen der Blockierung der Exzenterbuchse B erfolgt, indem den Blockierklötzen C eine Verschiebebewegung M nach radial innen (Arretieren des Stators E gegenüber der Wandung H) oder nach außen (Lösen dieser Arretierung) erteilt wird.

In Fig. 3 ist die Seitenregister-Verstellbewegung U für den jeweiligen Zylinder D 1 - D 4 nebst starr daran befestigtem Rotor F, Z angedeutet, die zugehörige Linearführung, gegebenenfalls mit Linearantrieb, ist jedoch der Übersichtlichkeit halber nicht gezeichnet. Im Rahmen der Erfindung wäre dann auch eine Nachführung des Stators G der Seitenregister-Verstellbewegung U ebenfalls mittels Linearführung und -antrieb denkbar.

Eine Stator-Nachführung der Bewegung des jeweiligen Zylinders D 1 - D 4 ist vor allem dann angebracht, wenn die Anstellbewegung W eines der Gummituchzylinder D 2, D 3 oder die Diagonalregister-Verstellung R eines der Plattenzylinder D 1, D 4 zu groß ist, als daß noch ein Ausgleich über den Luftspalt L zwischen Rotorpaket F und Statorpaket G möglich wäre.

Bei Druck-An-Stellung ist der Stator G spiel- und elastizitätsfrei gegen die Druckwerkswandung H abgestützt, wohingegen der Rotor F durch die beiden inneren und äußeren Kugellager 21, 22 spiel- und elastizitätsbehaftet mit der Druckwerkswand verbunden ist. Sämtliche Toleranzen durch Lagerspiele der beiden Kugellager 21, 22 sowie elastische Verformungen und Verlagerungen durch die noch anstehende Anstellkraft IW können bei fest arretiertem Stator G durch den Luftspalt des Elektromotors ausgeglichen werden. Dieser Effekt ist noch dadurch gefördert, daß der Elektromotor keine eigene Lagerung direkt zwischen Stator und Rotor besitzt. Mithin ist eine axiale und radiale Verschiebung von Stator zu Rotor nicht behindert, sondern grundsätzlich in begrenztem Umfang möglich. Die axiale Verschiebungsmöglichkeit längs des Luftspalts L kann vorteilhaft für die Seitenregister-Verstellung U ausgenützt werden.

Nach alledem kann aufgrund der Erfindung für alle Bewegungen und Verstellungen der Zylinder D 1 - D 4 (wie Anstellbewegung W, Diagonalregister-Verstellung R, Seitenregister-Verstellung U und Umfangsregister-Verstellung S, T) das Prinzip der direkten, steifen Anbindung des Rotors an den Zylinder und des Stators an die Druckwerkswand verwirklicht werden. Die noch erforderlichen Beweglichkeiten bzw. Beweglichkeitstoleranzen lassen sich über den Motor-Luftspalt axial und/oder radial ausgleichen.

Im Rahmen der Erfindung sind elektrische Antriebsmotoren der Ausführung mit Zylinderläufer und damit mit Radialfeld und der Ausführung mit Scheibenläufer und damit mit Axialfeld einsetzbar.

Wegen weiterer Einzelheiten insbesondere zur oben angesprochenen Offsetdruckmaschine wird ergänzend auf die frühere Anmeldung 93 106 545.2 nach Art. 76 EPÜ verwiesen, woraus auch Einzelheiten für eine Exzenter-Nachführung ersichtlich sind.

## Patentansprüche

1. Druckmaschine mit wenigstens einem Zylinder (D1, D2, D3, D4) oder sonstigen Drehkörper, der bezüglich seiner Drehachse (Y) in einer Wandung (H) längsverstellbar (U) geführt ist, **dadurch gekennzeichnet, daß** der Drehkörper zu seinem Direktantrieb mit dem Rotor (F) eines Elektromotors (F, G) steif und ortsfest verbunden ist, dessen Stator (G) an der Wandung (H) steif und ortsfest abgestützt ist, wobei der Drehkörper/Rotor-Verbund (D1, D2, D3, D4; F) mit einer der Längsverstellbewegung (U) entsprechenden Linearführung versehen ist, und beim Elektromotor (F, G) Rotor (F) und Stator (G) zueinander mit einem solchen Abstand angeordnet und/oder derart verstellbar ausgebildet sind, daß der von diesen begrenzte Luftspalt (L) zum Ausgleich der Drehkörper/Rotor-Linearverstellbewegung (U) veränderbar ist.

2. Druckmaschine nach Anspruch 1, dadurch gekennzeichnet, daß die Wandung (H) einen ortsfest angebrachten, vorzugsweise brückenartigen und/oder L-förmigen Ansatz (K) aufweist, an dem der Stator (G) angebracht ist.

3. Druckmaschine nach Anspruch 1 oder 2, dadurch gekennzeichnet, daß der Drehkörper/Rotor-Verbund (D1, D2, D3, D4; F) mit einem der Längsverstellbewegung (U) entsprechenden Linearantrieb versehen ist.

4. Druckmaschine nach einem der vorangehenden Ansprüche, dadurch gekennzeichnet, daß beim Elektromotor (F, G) der Rotor (F) ohne Lagerung am oder gegenüber dem Stator (G) angeordnet ist.

5. Druckmaschine nach einem der vorangehenden Ansprüche, wobei der Stator (G) an der Wandung (H) lösbar abgestützt ist, gekennzeichnet durch eine auf den Stator (G) einwirkende lineare Nachführeinrichtung dergestalt, daß er die Drehkörper/Rotor-Linearverstellbewegung (U) entsprechend nachvollzieht.

6. Druckmaschine nach Anspruch 5, dadurch gekennzeichnet, daß die Nachführeinrichtung für den Stator eine in oder an der Wandung oder gegebenenfalls deren Ansatz angebrachte axiale Linearführung aufweist, die der Linearführung (U) des Drehkörper/Rotor-Verbunds (D1, D2, D3, D4; F) entspricht.

7. Druckmaschine nach Anspruch 5 oder 6, gekennzeichnet durch eine mit der Nachführeinrichtung in Wirkungsverbindung stehende Feststelleinrichtung (C) zum Arretieren und/oder zur steifen Anbindung des Stators (G) bezüglich der Wandung (H) und/oder deren Ansatzes (K).

8. Druckmaschine nach Anspruch 6 oder 7, gekennzeichnet durch einen am axial verschiebbar gelagerten Stator angreifenden Linearantrieb.

9. Druckmaschine nach Anspruch 8, gekennzeichnet durch dem Stator (G) und dem Drehkörper/Rotor-Verbund (D1, D2, D3, D4; F) zugeordnete Linearantriebe, die miteinander gekoppelt und/oder synchronisiert sind.

10. Druckmaschine nach einem der vorangehenden Ansprüche, dadurch gekennzeichnet, daß der Elektromotor (F, G) im Rahmen einer Steuerungskette oder eines Regelkreises für die Umfangsregisterverstellung als Stellglied für die Dreh-oder Winkelstellung (S, T) des Zylinders (D1, D2, D3, D4) ausgebildet ist.

11. Druckmaschine nach einem der vorangehenden Ansprüche, mit einem oder mehreren Druckwerken (3a - 3d), an deren jeweiliger Wandung (H) die Zylinder (D1 - D4) stellbar (U) gelagert und geführt sind, dadurch gekennzeichnet, daß vom Elektromotor (F, G) der Stator (G) an der Druckwerks- wandung (H), und der Rotor (F) an der Antriebswelle (E) des Zylinders (D1, D2, D3, D4) unmittelbar und steif fixiert sind.

## Claims

1. Printer having at least one cylinder (D1, D2, D3, D4) or other rotary body, which is guided longitudinally displaceably (U) with respect to its axis of rotation (Y) in a wall (H), characterised in that for its direct drive the rotary body is connected rigidly and permanently to the rotor (F) of an electric motor (F, G), whose stator (G) bears rigidly and permanently on the wall (H), wherein the rotary body/rotor composite (D1, D2, D3, D4) is provided with a linear guide corresponding to the longitudinal displacement motion (U), and in that in the electric motor (F, G) the rotor (F) and stator (G) are disposed with such a distance from one another and/or are so displaceably formed that the air gap (L) defined thereby is variable in order to equalise the rotary body/rotor linear displacement motion (U).

2. Printer according to claim 1, characterised in that the wall (H) has a permanently mounted, preferably bridge-like and/or L-shaped projection (K) on which the stator (G) is mounted.

3. Printer according to claim 1 or 2, characterised in that the rotary body/rotor composite (D1, D2, D3, D3) is provided with a linear drive corresponding to the longitudinal displacement motion (U).

4. Printer according to one of the preceding claims, characterised in that in the electric motor (F, G) the rotor (F) is disposed without bearing on or against the stator (G).

5. Printer according to one of the preceding claims, wherein the stator (G) is detachably supported on the wall, characterised by a linear tracking device acting on the stator (G) in such a manner that it follows the rotary body/rotor linear displacement motion (U) correspondingly.

6. Printer according to claim 5, characterised in that the tracking device for the stator has an axial linear guide which is mounted in or on the wall or optionally on its projection and which corresponds to the linear guiding (U) of the rotary body/rotor composite (D1, D2, D3, D4).

7. Printer according to claim 5 or 6, characterised by a fixing device ( C) for locking and/or for the rigid connection of the stator (G) with respect to the wall (H) and/or its projection (K).

8. Printer according to claim 6 or 7, characterised by a linear drive acting on the stator, which is mounted axially displaceably.

9. Printer according to claim 8, characterised by linear drives allocated to the stator (G) and the rotary body/rotor composite (D1, D2, D3, D4), which are coupled together and/or are synchronised.

10. Printer according to one of the preceding claims, characterised in that the electric motor (F, G) is formed in the framework of a control chain or a control circuit for the circumferential register displacement as an actuator for the rotary or angular position (S, T) of the cylinder (D1, D2, D3, D4).

11. Printer according to one of the preceding claims, having one or more printing units (3a-3d), on whose respective wall (H) the cylinders (D1-D4) are displaceably (U) mounted and guided, characterised in that of the electric motor (F, G) the stator (G) is fixed directly and rigidly to the printing unit wall (H) and the rotor (F) to the drive shaft (E) of the cylinder (D1, D2, D3, D4).

## Revendications

1. Machine à imprimer comprenant au moins un cylindre (D1, D2, D3, D4) ou autre corps de rotation, qui, relativement à son axe de rotation (Y), est guidé de manière réglable en direction longitudinale (U), dans une paroi (H), caractérisée en ce que le corps de rotation, en vue de son entraînement direct, est relié de manière rigide et en position fixe au rotor (F) d'un moteur électrique (F, G) dont le stator (G) s'appuie de manière rigide et en position fixe sur la paroi (H), l'ensemble corps de rotation/rotor (D1, D2, D3, D4; F) étant pourvu d'un guidage linéaire correspondant au mouvement de réglage longitudinal (U), et en ce que dans le moteur électrique (F, G), le rotor F et le stator (G) sont disposés à une distance l'un de l'autre telle et/ou sont d'une configuration réglable l'un par rapport à l'autre de façon telle, que l'entrefer (L) délimité par ceux-ci est variable pour compenser le mouvement de réglage linéaire (U) de l'ensemble corps de rotation/rotor.

2. Machine à imprimer selon la revendication 1, caractérisée en ce que la paroi (H) présente une embase (K) de préférence en forme de pont et/ou de L, rapportée en position fixe, sur laquelle est monté le stator (G).

3. Machine à imprimer selon la revendication 1 ou 2, caractérisée en ce que l'ensemble corps de rotation/rotor (D1, D2, D3, D4; F) est pourvu d'un entraînement linéaire correspondant au mouvement de réglage longitudinal (U).

4. Machine à imprimer selon l'une des revendications précédentes, caractérisée en ce que dans le moteur électrique (F, G), le rotor (F) est agencé sans système de palier dans le stator (G) ou par rapport à celui-ci.

5. Machine à imprimer selon l'une des revendications précédentes, le stator (G) s'appuyant de manière amovible sur la paroi (H), caractérisée par un dispositif suiveur linéaire agissant sur le stator (G), d'une configuration telle, qu'il suive le mouvement de réglage linéaire (U) de l'ensemble corps de rotation/rotor.

6. Machine à imprimer selon la revendication 5, caractérisée en ce que le dispositif suiveur pour le stator, présente un guidage linéaire axial qui est placé dans ou sur la paroi ou, le cas échéant, son embase, et qui correspond au guidage linéaire (U) de l'ensemble corps de rotation/rotor (D1, D2, D3, D4; F).

7. Machine à imprimer selon la revendication 5 ou 6, caractérisée par un dispositif d'immobilisation (C) interagissant avec le dispositif suiveur et destiné à bloquer et/ou fixer de manière rigide le stator (G) par rapport à la paroi (H) et/ou son embase (K).

8. Machine à imprimer selon la revendication 6 ou 7, caractérisée par un entraînement linéaire agissant sur le stator monté de manière axialement mobile.

9. Machine à imprimer selon la revendication 8, caractérisée par des entraînements linéaires qui sont associés au stator (G) et à l'ensemble corps de rotation/rotor (D1, D2, D3, D4; F), et qui sont couplés et/ou synchronisés l'un avec l'autre.

10. Machine à imprimer selon l'une des revendications précédentes, caractérisée en ce que le moteur électrique (F, G), dans le cadre d'une bouche de commande ou d'une boucle de régulation, pour le réglage du repérage périphérique, est réalisé en tant qu'organe de réglage pour la position de rotation ou la position angulaire (S, T) du cylindre (D1, D2, D3, D4).

11. Machine à imprimer selon l'une des revendications précédentes, comprenant un ou plusieurs groupes d'impression (3a - 3d) sur les parois (H) respectives desquels, les cylindres (D1 - D4) sont montés et guidés de manière réglable (U), caractérisée en ce que le stator (G) du moteur électrique (F, G) est fixé directement et de manière rigide à la paroi (H) du groupe d'impression, et le rotor (F) dudit moteur électrique (F, G) est fixé directement et de manière rigide à l'arbre d'entraînement (E) du cylindre (D1, D2, D3, D4).
